# EUROPEAN PATENT APPLICATION

(11) **EP 1 060 665 A2**
(43) Date of publication of application: **20.12.2000**
(21) Application number: 00201719.2
(22) Date of filing: 15.05.2000
(51) Int. Cl.: A01K 97/10, F16B 2/10

(54) **A support clip**

(30) Priority: 13.05.1999 GB 9911182
(71) Applicant: Fox Design International Limited, Chelmsford, Essex CM3 8HQ (GB)
(72) Inventor: Fox, Clifford Royston, Chelmsford, Essex CM3 8HQ (GB)
(74) Representative: Crouch, David John

(57) **Abstract**

A fishing rod support clip (10) having jaws (20) which are resiliently urged towards one another when forcibly moved apart from one another. Adjustment means (34) are arranged in relation to the jaws (20) to enable their normal rest positions relative to one another to be adjusted.

## Description

The present invention relates to a support clip having jaws which are resiliently urged towards one another when forcibly moved apart from one another.

One such clip is described and illustrateed in GB 2,178,282. It comprises a clip of generally U-shaped section which is resilient so that the two arms of the U-shape, when forcibly moved apart from one another, are urged back to their normal rest position by virtue of the natural resilience of the material of the clip.

A problem encountered with such a clip is that it does not readily receive elongate members, such as fishing rods, of widely varying cross-sectional diameters.

The present invention seeks to obviate this disadvantage.

Accordingly, the present invention is directed to a support clip having the features set out in the opening paragraph of the present specification, in which adjustment means are arranged in relation to the jaws to enable their normal rest positions relative to one another to be adjusted.

Such a construction is especially valuable as a fishing rod support clip.

Preferably, the jaws are pivotable about respective pivots provided as parts of the support clip.

One way in which adjustment of the normal rest positions of the jaws relative to one another can be facilitated is by providing the pivots on a yieldable base of the clip. The pivots may comprise pivot pins.

The adjustment may be effected by means of a screw. This may extend between the pivot pins such that rotation of the screw causes the pins to be moved towards or away from one another in a direction which is transverse of the axes of the pins.

When the jaws are forcibly moved apart from one another, a restoring force to resiliently urge them back towards one another may be provided by a compression spring positioned between portions which are respectively fixed in relation to the jaws and which are located on the opposite sides of the pivots relative to the jaws.

An example of a support clip made in accordance with the present invention is illustrated in the accompanying drawings, in which:
- Figure 1: shows an end view of the clip;
- Figure 2: shows a side view of the clip in the direction of the arrow II in Figure 1;
- Figure 3: shows a cross-sectional view through the clip in the plane III shown in Figure 2;
- Figure 4: shows an end view of the clip shown in Figure 1, with pivots thereof drawn closer together;
- Figure 5: shows an end view of a base part of the clip shown in Figure 1;
- Figure 6: shows a side view of the base part shown in Figure 5 in the direction of the arrow VI shown therein;
- Figure 7: shows a cross-sectional view of the part shown in Figures 5 and 6 in the plane VII shown in Figure 6;
- Figure 8: shows a plan view of the part shown in Figures 5 to 7;
- Figure 9: shows a cross-sectional view through a jaw part of the clip shown in Figures 1 to 4;
- Figure 10: shows a side view of the part shown in Figure 9 in the direction of the arrow X shown therein;
- Figure 11: shows an end view of the part shown in Figures 9 and 10, in the opposite direction of view of the cross-sectional view shown in Figure 9;
- Figure 12: shows a side view of the part shown in Figure 9 in the direction of the arrow XII shown in that Figure;
- Figure 13: shows a sectional view of the part shown in Figures 9 to 12 taken in the plane XIII shown in Figure 11;
- Figure 14: shows a side view of a modified form of support clip corresponding to the view shown in Figure 2 of the first embodiment; and
- Figure 15: shows an end view of the clip shown in Figure 14.

In the accompanying drawings, corresponding parts have been given the same reference numerals.

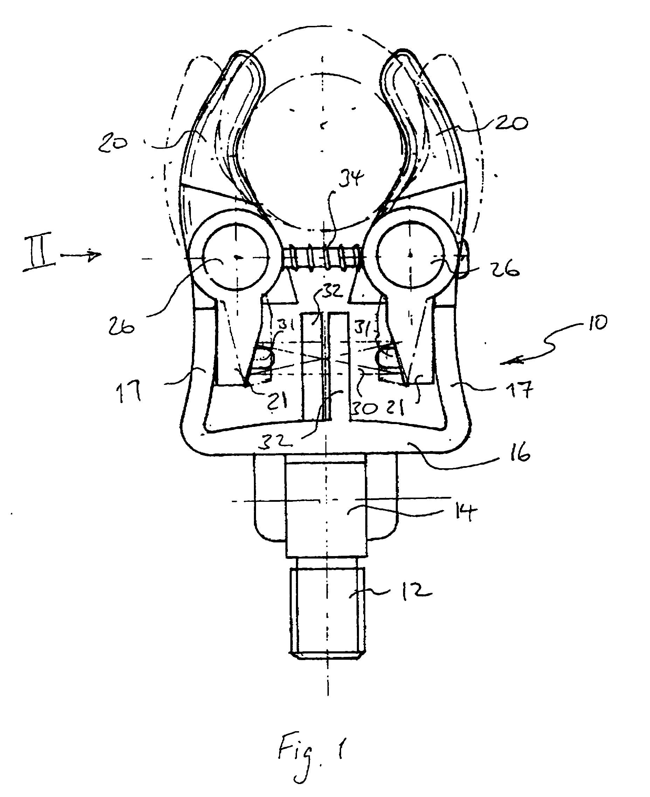

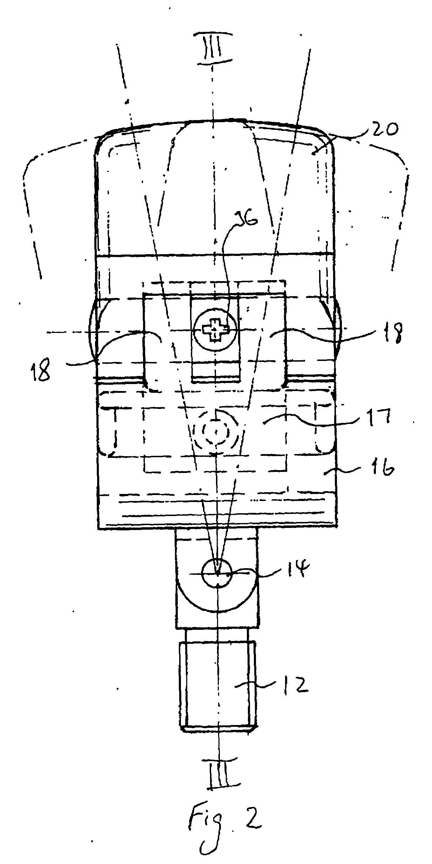

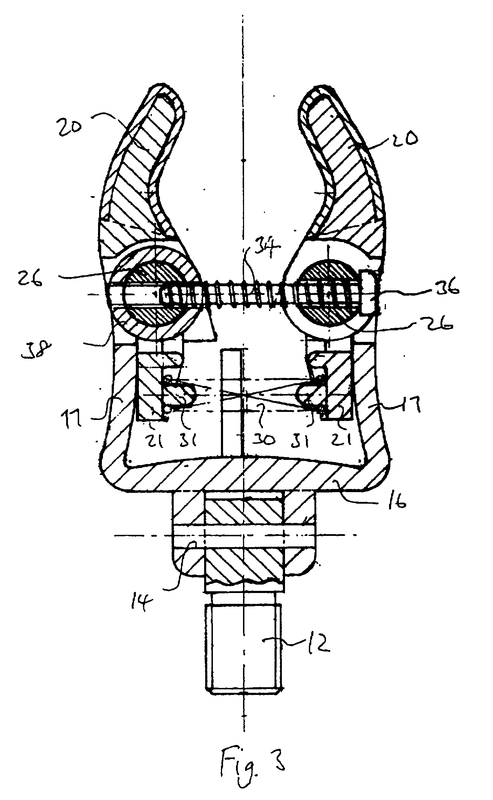

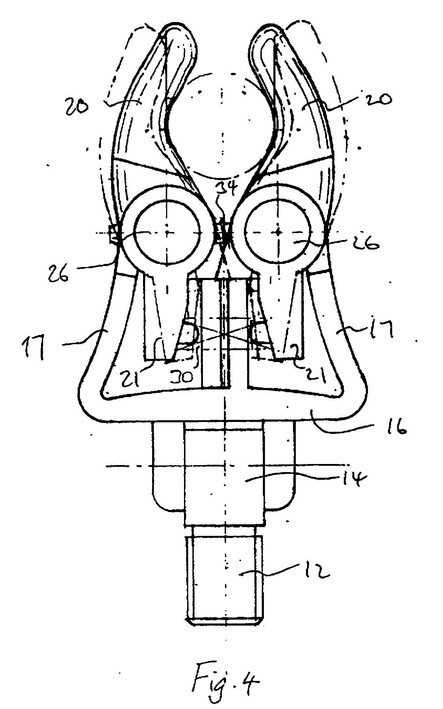

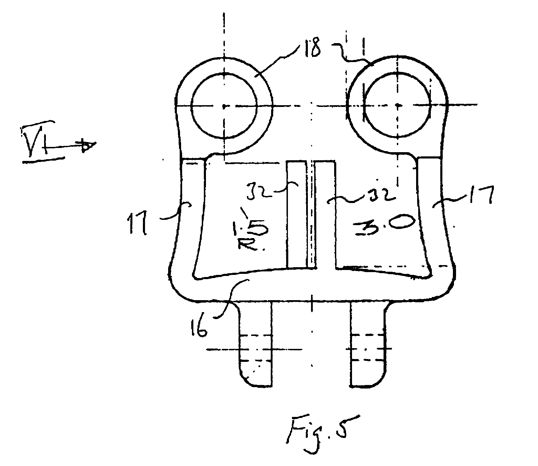

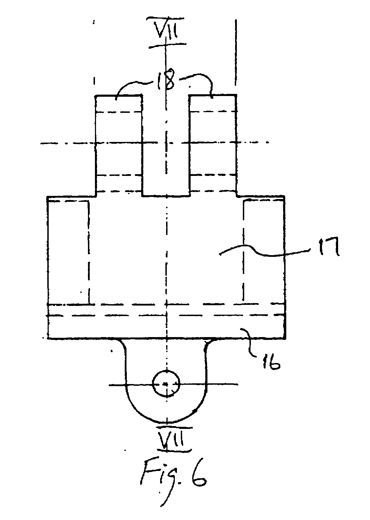

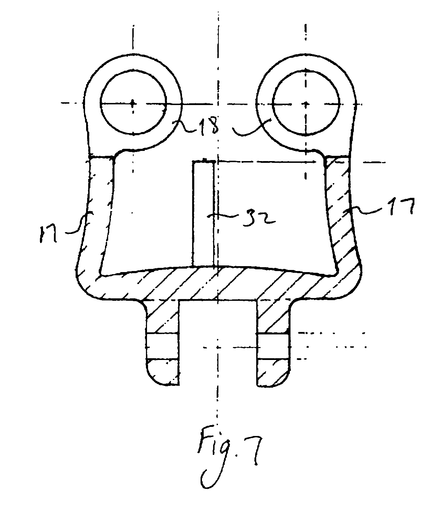

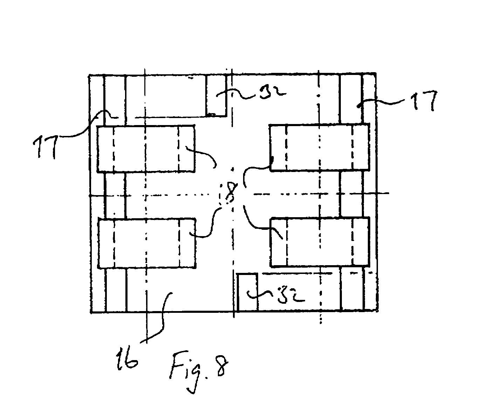

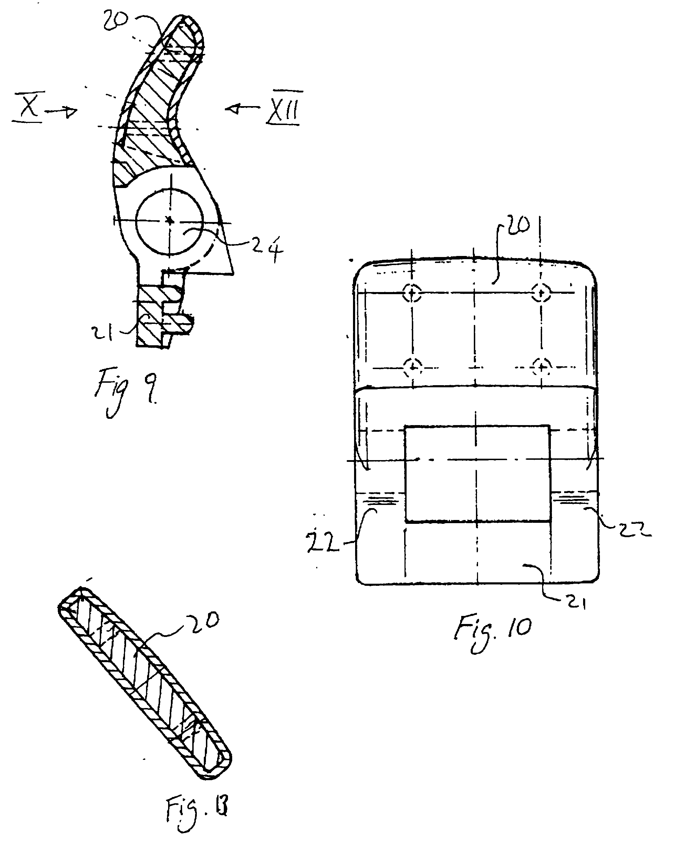

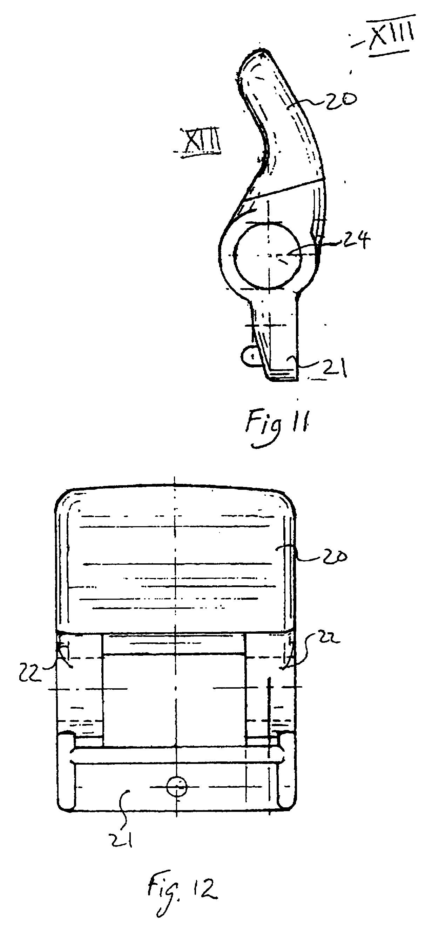

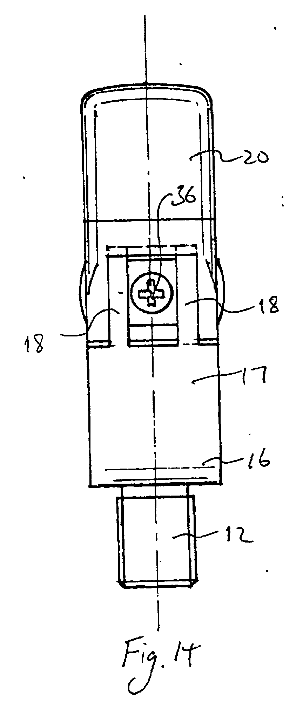

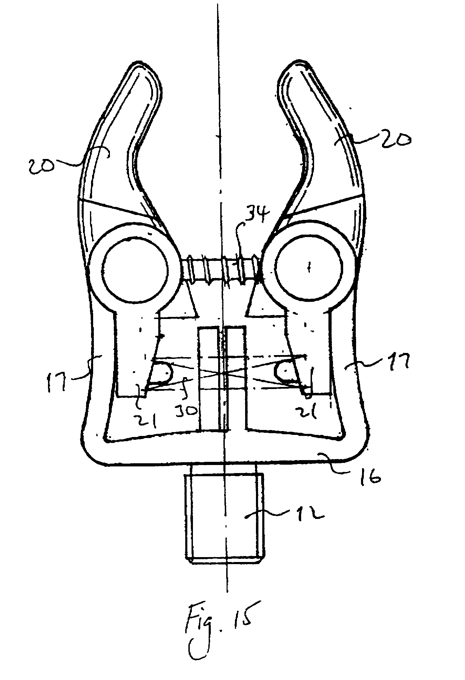

The support clip 10 shown in Figures 1 to 4 is a fishing rod support clip comprising a brass screw-threaded stem 12 to enable the clip to be secured to the upper end of a correspondingly screw-threaded bank-stick or buzz-bar, a mounting pivot 14 to enable the clip to be pivoted relative to the bank-stick through approximately 20°, to suit conditions, about an axis which is generally transverse of a fishing rod when it is held by clip, and a support base 16 pivotally mounted on the pivot 40. The support base 16 is made of a yieldable polypropylene plastics material.

The base 16 is generally U-shaped in section with respective arms 17 extending in an intended upward direction. It is shown more clearly in Figures 5 to 8.

Two rings 18 are formed on the base 16 integrally therewith and located on an intended upper end of each arm 17.

The clip has two jaws 20, each being arcuate in section with their concave faces directed towards one another. Each jaw 20 is made of glass filled nylon (GFN) and covered with a thermoplastic rubber (TPR), such as Evoprene (TM), at its intended upper end to improve the ability of the jaws to grip a fishing rod. Lugs 21 which are integral with the jaws 20 are connected by bridging portions 22, as can be seen more clearly from Figures 9 to 13. A hole 24 of circular section extends through two portions 22 of each jaw 20 (as again can be seen more clearly from Figures 9 to 13). The diameter of the hole 24 is the same as the internal diameter of each ring 18. A pivot pin 26 extends through the hole 24 of each jaw 20 and also through an associated pair of rings 18 so that the jaws 20 pivot about the ends of the arms 17 of the base 16 respectively. The lugs 21 are urged apart by a stainless steel compressing spring 30 extending between the lugs 21, the spring being located on each lug 21 by a respective spigot 31.

Stops 32 project upwardly from the base 16 to protect the spring 30 and to act as abutment stops to limit the outward pivotable movement of the jaws 20.

A stainless steel tapping screw 34 extends between and through the two pivot pins 26. Its head 36 rests on the outside of one of the pins 26, and its opposite end screw-threadingly engages a collar 38 which surrounds the other pin 26. The head of the screw 36 is accessible between two rings 18, as shown in Figure 2.

When the clip is in use, a portion of a fishing rod having a cross-sectional diameter of 20mm can be held between the jaws 20. To achieve this, the selected part of the rod can be pushed downwardly between the jaws so that the latter are urged away from one another against the restoring force of the compression spring 30 until the full diameter of that part of the rod passes the ends of the jaws 20, whereupon the latter move towards one another under the action of the compression spring 30 until that part of the rod is held snugly between the jaws 20.

At the same time, the arrangement of the jaws shown in broken lines is possible to hold a part of a fishing rod which is 26mm in diameter.

If it is desired for the clip to hold a part of a fishing rod which is less than 20mm in diameter, the tapping screw 36 can be rotated to draw the two pivot pins 26 closer together with the base 16 yielding resiliently to facilitate this, as shown in Figure 4, so that now a part of a fishing rod having a diameter as low as 13mm can be satisfactorily held by the same clip 10. This can be done readily, precisely, and without any need to dismantle the clip 10.

When a strike is made, the limited freedom of rotation of the clip about the pivot 14 ensures that the fishing rod can be readily removed from the clip 10, by orienting the rod through an angle beyond the freedom of rotation provided by the pivot 14.

The modification shown in Figures 14 and 15 omits the pivot 14 and is of much narrower construction in the direction of the intended longitudinally extending fishing rod which it is to hold. Otherwise, as shown in Figure 15, its dimensions and appearance as viewed end on are substantially the same as shown in Figure 1.

Numerous variations and modifications to the illustrated clip may occur to the reader without taking the resulting construction outside the scope of the present invention. For example, in a very simplified form of the present invention, the pivots 26 could be entirely omitted as well as the spring 30, and the jaws may be constituted by upwardly extending portions of the arms 17. These may be made sufficiently resilient to provide for the restoring force desired. A screw like the one labelled 34 could extend and engage lower portions of the arms 17 to enable them to be drawn together or moved apart.

## Claims

1. A support clip (10) having jaws (20) which are resiliently urged towards one another when forcibly moved apart from one another, **characterised in that** adjustment means (34) are arranged in relation to the jaws (20) to enable their normal rest positions relative to one another to be adjusted.

2. A support clip according to claim 1, **characterised in that** the support clip (10) is a fishing rod support clip (10).

3. A support clip according to claim 1 or claim 2, **characterised in that** the jaws (20) are pivotable about respective pivots (26) provided as parts of the support clip (10).

4. A support clip according to claim 3, **characterised in that** the pivots (26) are provided on a yieldable base (16) of the clip (10).

5. A support clip according to claim 3 or claim 4, **characterised in that** the pivots (26) comprise pivot pins (26).

6. A support clip according to any preceding claim, **characterised in that** the adjustment is effected by means of a screw (34).

7. A support clip according to claim 6 read as appended to any one of claims 3 to 5, **characterised in that** the screw (34) extends between the pivots (26) such that rotation of the screw (34) causes the pivots (26) to be moved towards or away from one another in a direction which is transverse of the axes of pivoting.

8. A support clip according to any preceding claim, **characterised in that** the means (30) which are provided to urge the jaws (20) back resiliently towards one another when they are moved further apart comprise a compression spring (30) positioned between portions which are respectively fixed in relation to the jaws (20) and which are located on the opposite sides of the pivots (26) relative to the jaws (20).

9. A support clip substantially as described herein with reference to and as illustrated in Figures 1 to 13 of the accompanying drawings, with or without the modifications as shown in Figures 14 and 15.
